(19) Europäisches Patentamt
European Patent Office
Office européen des brevets

(11) **EP 2 283 300 B1**

(12) **EUROPÄISCHE PATENTSCHRIFT**

(45) Veröffentlichungstag und Bekanntmachung des Hinweises auf die Patenterteilung:
**05.12.2012 Patentblatt 2012/49**

(51) Int Cl.:
***F41G 3/00*** *(2006.01)*

(21) Anmeldenummer: **09749545.1**

(22) Anmeldetag: **06.05.2009**

(86) Internationale Anmeldenummer:
**PCT/EP2009/003224**

(87) Internationale Veröffentlichungsnummer:
**WO 2009/141055 (26.11.2009 Gazette 2009/48)**

(54) **VORRICHTUNG UND VERFAHREN ZUR MESSUNG DER MÜNDUNGSGESCHWINDIGKEIT EINES PROJEKTILS ODER DERGLEICHEN**

DEVICE AND METHOD FOR MEASURING THE MUZZLE VELOCITY OF A PROJECTILE OR SIMILAR

DISPOSITIF ET PROCÉDÉ DE MESURE DE LA VITESSE INITIALE D'UN PROJECTILE OU ANALOGUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **21.05.2008 DE 102008024574**

(43) Veröffentlichungstag der Anmeldung:
**16.02.2011 Patentblatt 2011/07**

(73) Patentinhaber: **Rheinmetall Air Defence AG**
**8050 Zürich (CH)**

(72) Erfinder: **FRICK, Henry, Roger**
**8442 Hettlingen (CH)**

(74) Vertreter: **Dietrich, Barbara**
**Thul Patentanwaltsgesellschaft mbH**
**Rheinmetall Platz 1**
**40476 Düsseldorf (DE)**

(56) Entgegenhaltungen:
**EP-A1- 0 331 670    US-A- 4 283 989**

## Beschreibung

In der DE 697 09 291 T2 (EP 0 840 087 B1) werden Mittel zur Steuerung der Anfangsgeschwindigkeit eines Geschosses offenbart. Dabei ist ein Sensormittel vorgesehen, das einen auf die Mündungsgeschwindigkeit bezogenen Parameter messen kann. Dies erfolgt mit Hilfe der zumindest im bzw. am Waffenlauf angebrachten Sensoren, die einen höheren Druck im Waffenlauf aufnehmen können, welcher sich durch das Erhitzen der Treibgase am Waffenrohr einstellt. Als Sensoren werden Dehnungsmessstreifen vorgeschlagen, die so angepasst sind, dass sie Kontakt mit dem Waffenlauf haben. Dabei wird die Ausdehnung des Waffenlaufs gemessen. Aus der zeitlichen Differenz zwischen der Registrierung der Projektilpassage durch die beiden einzelnen Sensoren werden die Bewegung und damit die Geschwindigkeit des Projektils ermittelt.

Die DE 10 2005 024 179 A1 verzichtet ganz auf eine direkte Messung der aktuellen Mündungsgeschwindigkeit, da die reale Mündungsgeschwindigkeit durch Information der aktuellen Fluggeschwindigkeit des Geschosses bestimmt wird, d.h., aus dieser zurückgerechnet wird. Anhand dieser aktuellen Geschossgeschwindigkeit wird dann die Zündzeit des Geschosses mit Hilfe einer Norm-Mündungsgeschwindigkeit voreingestellte Zündzeit korrigiert und als aktuelle Zünderstellzeit verwendet. Zur Übertragung dieser Information an das Geschoss dient ein Mikrowellensender, vorzugsweise im GHz-Bereich, der die aktuelle, beispielsweise von einem Feuerleitrechner bestimmte Tempierung an die Munition bzw. ein Geschoss sendet.

Eine weitere Methode besteht darin, das Rohr als runden Hohlleiter zu betreiben und die Dopplergeschwindigkeit des Projektils im Rohr zu messen, wie in der EP 0 023 365 A2 nachlesbar. Die Frequenz des Signals liegt dabei über der Grenzfrequenz für den betreffenden Hohlleiter-Mode. Die sich dabei aufbauende elektromagnetische Welle breitet sich im Rohr aus und wird vom Projektil reflektiert. Zudem ergibt sind eine, von der momentanen Geschwindigkeit abhängige Dopplerfrequenzverschiebung.

Die DE 27 17 949 A1 beschreibt ein Gerät zur Messung von Geschwindigkelten im Lauf unter Verwendung von elektromagnetischen Wellen, wobei als Maßstab für die Wegänderung eines Geschosses im Lauf die Hohlleiterwellenlänge des Laufes verwendet wird. Dazu sind ein Sender und ein Empfangsdetektor in gleichbleibendem Abstand zum Lauf angeordnet. Das Geschoss wird dabei als Reflektor für die elektromagnetischen Wellen genutzt. An der Laufmündung ist ein Homstrahler in rotationssymmetrischer Ausführung angebracht. In der Geschossrichtung ist schräg ein Spiegel angeordnet, der die aus dem rechteckigen Homstrahler kommenden Wellen entsprechend in den Lauf umlenkt. Die Hohlleiterwellenlänge des Laufes wird dadurch bestimmt, dass In einem besonderen Versuch anstelle des Geschosses im Lauf ein Spiegel für die elektromagnetischen Wellen definiert langsam verschoben wird und damit der Abstand zwischen zwei Maxima messtechnisch erfasst wird.

Aus der EP 0 331 670 A1 sind ein Verfahren und eine Einrichtung zur Bestimmung Innenballistischer Kenngrößen in Rohrwaffen bekannt, wobei eine elektromagnetische Welle über eine seitlich am Waffenrohr vorgesehenen Hohleiterübergang eingekoppelt und nach Reflexion an dem im Waffenrohr befindlichen Geschoss wieder ausgekoppelt wird, sodass signifikante Messungen auch bei einem scharfen Schuss möglich sind. Dabei wird von der grundlegenden Überlegung ausgegangen, zumindest die Hälfte der Energie der elektromagnetischen Wellen anstelle in Richtung zum Geschoss einzukoppeln aus der Mündung des Waffenrohrs abzustrahlen. Zur Einkoppelung der Wellen werden diese aufgeteilt und an zumindest zwei beabstandeten Stellen des Hohlleiterüberganges dem Waffenrohr zugeführt, sodass sich die in Richtung zum Geschoss ausbreitenden Wellenteile addieren und die in die entgegen gesetzte Richtung ausbreitende Welle kompensieren.

Die nach veröffentlichte DE 10 2006 058 375.2 schlägt vor, das Waffenrohr bzw. das Abschussrohr und/oder Teile der Mündungsbremse als Hohlleiter zu nutzen (als Hohlleiter gilt ein Rohr mit einer charakteristischen Querschnittsform, das eine sehr gut elektrisch leitende Wand besitzt. Technisch weit verbreitet sind vor allem Rechteck- und Rund-Hohlleiter), welches Jedoch unter der Grenzfrequenz des betreffenden Hohlleiter-Mode betrieben wird. Der Abstand zwischen Sende- Koppler und Empfangs- Koppler ist hierbel feststehend.

Selbige Idee verfolgend atellt sich die Erfindung die Aufgabe, ein weiteres Messverfahren und eine Vorrichtung zur Durchführung dieses Messverfahrens aufzuzelgen, das eine ausgezeichnete und genaue Ermittlung der Mündungeschwindlgkeit eines Projektils oder dergleichen ermöglicht.

Gelöst wird die Aufgabe durch die Merkmale des Patentanspruchs 1 bezüglich der Messvorrichtung und des Patentanspruchs 6 bezüglich des Messverfahrens. Vorteilhafte Ausführungen sind in den jeweiligen Unteranprüchen aufgeführt.

Der Erfindung liegt die Idee zugrunde, die Mündungsgeschwindigkeit selbst vorzugsweise vor oder nach dem Projektil zu messen bzw. zu bestimmen, wobei eine Kombination die Messgenauigkeit erheblich erhöht. Bei der Messung vor dem Projektil wird dann die Tatsache berücksichtigt, dass die Spitze des Projektils beim Durchtritt des Hohlleiters das elektromagnetische Feld beeinflusst. Diese Beeinflussung wird dadurch kompensiert, dass in der Regel der Munitionstyp bekannt ist, sodass Projektil bestimmende Werte verwendet werden, die es dann erlauben, den Einfluss der Spitze auf die Messung zu kompensieren. Bei der Messung nach dem Projektil wird die zylindrische Form des Bodens ausgenutzt, wodurch die Messung unabhängig von der Form der Spitze des Projektils erfolgt. Hierbei beeinflusst der Boden das elektromagnetische Feld. Die Messmethode nach dem Projektildurchlauf biete sich dadurch an, dass die meisten Arten von Projektilen zylindrische flache Böden besitzen. Diese jeweilige Änderung wird durch einen Empfangskoppler erfasst und einer Auswerteeinrichtung zugeführt.

Vorzugsweise wird als Hohlleiter ein glattes Rohr beliebigen Querschnitts verwendet, anders als in der nach veröffentlichten Anmeldung (s. o.), in der als Hohlleiter ein mit einem Profil versehener Hohlleiter verwendet wird. Des Weiteren wird mit Hilfe wenigstens eines Sendekopplers und eines Empfängerkopplers das elektromagnetische Feld ohne Anwesenheit des Projektils erfasst, d.h., bevor das Projektil den Hohlleiter durchtritt. Die letzten Abtastwerte vor dem Durchtritt jedes Projektils werden zur Kalibrierung der Messung benutzt. Somit werden alle Temperatur bedingten oder anderen Einflüsse in der Kalibrierung erfasst. Beim Durchtreten des Projektils wird die zeitliche Änderung des elektromagnetischen Feldes erfasst und mit der Kalibrierung normiert. Die Messung der Mündungsgeschwindigkeit erfolgt dadurch unabhängig von Temperaturänderungen oder anderen Einflüssen.

Der Signalerzeuger (z. B. Oszillator) liefert ein Signal mit konstanter Mittenfrequenz, welche unterhalb der kleinsten Grenzfrequenz des Hohlleiters betrieben wird. Gegeben durch die Geometrie und Art des Sendekopplers (Spule, Dipol etc.) werden mehrere Hohlleiter-Moden ($TE_{mn}$ mit m= 0, 1, 2 ... und n= 1, 2, 3...) angeregt. Der Signalerzeuger erzeugt entweder einen Träger im Dauerstrich-Betrieb (CW- Betrieb) oder ein moduliertes Signal.

Der Abstand zwischen einem Sendekoppler, der seinerseits die Signale des Oszillators erhält, und dem Empfangskoppler ist variabel und kann je nach Modenselektion des Hohlleiters individuell gewählt werden, ist aber abhängig vom Kaliber, der Innenabmessung des Hohlleiters sowie der Frequenz.

Anhand eines Ausführungsbeispiels mit Zeichnung soll die Erfindung näher erläutert werden. Es zeigt.

Fig. 1    eine Messanordnung zur Messung der Mündungsgeschwindigkeit eines Projektils vor dem Projektil,

Fig. 2    eine Messanordnung zur Messung der Mündungsgeschwindigkeit des Projektils nach dem Projektil.

Mit 1 ist ein glatter Hohlleiter (Rohr) gekennzeichnet, in welchem (wenigstens) ein Sende-koppler 2 sowie (zumindest) ein Empfangskoppler 3 eingebunden sind. Ein Oszillator 4 ist mit dem Sendekoppler 2 und eine Auswerteeinrichtung 5 mit dem Empfangskoppler 3 verbunden. Mit den vorgenannten Elementen kann die Mündungsgeschwindigkeit eines Projektils 6 bestimmt werden. Mit 7 ist die Mündung des Waffen- bzw. Abschussrohres 1 gekennzeichnet.

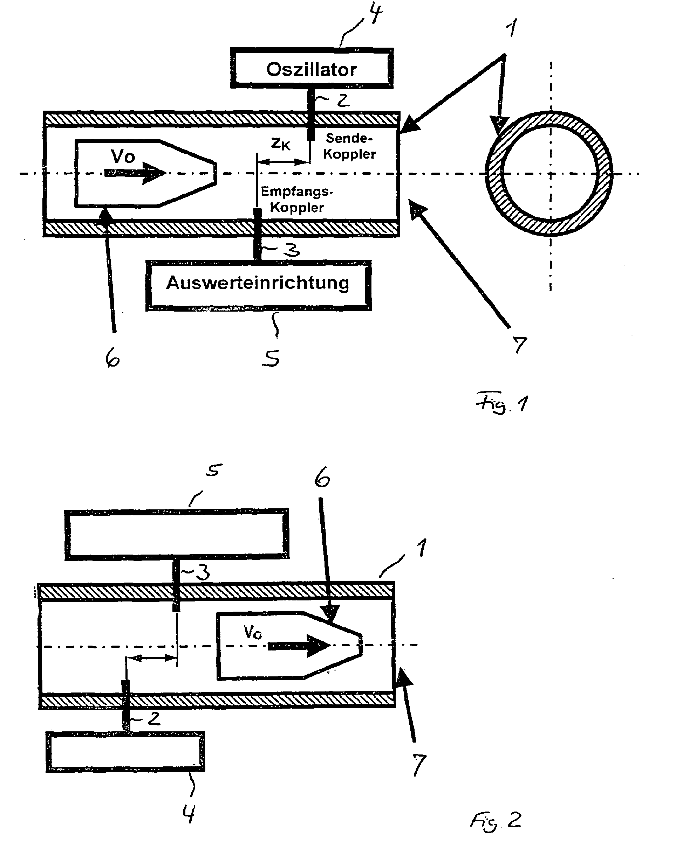

Der Oszillator 4 regt über den Sende-Koppler 2 einen Hohlleiter-Mode an (transversal elektrischen =TE und transversal magnetischen =TM. - Der gewünschte Hohlleiter-Mode wird durch mechanische und elektromagnetische Modenselektion angeregt.-) Gemessen wird in einem ersten Schritt das elektromagnetische Feld ohne Projektil 6. Durch das System 'Rohr' 1 (Hohlleiter 1) ergibt sich eine Signalstärke, die der Empfangs-Koppler 3, beispielsweise ein Pick-up- Sensor, aufnimmt und welches zur Auswerteeinheit 5 geleitet wird. Danach erfolgt die Messung vor dem Projektil 6 (Fig. 1) bzw. nach dem Projektil 6 (Fig. 2).

Der Abstand zwischen dem Sendekoppler 2 und dem Empfangskoppler 3 ist variabel und kann je nach Modenselektion des Hohlleiters 1 individuell gewählt werden, ist aber abhängig vom Kaliber, der Innenabmessung des Hohlleiters 1 sowie der Frequenz.

Werden Hohlleiter-Moden durch den Sendekoppler 2 angeregt, so kann das empfangene Signal (z. B. induzierte Spannung) am Empfangskoppler 3 folgende Form aufweisen

$$U_{Ind} = \sum_{n=1}^{\infty} A_n \cdot e^{-\frac{p_n}{a} \cdot z_k}$$

wobei a der Innenradius des Hohlleiters 1 ist und An sowie $P_n$ von n abhängige sind. Dabei gilt $P_1 < P_2 < P_3 < ....$

$z_k$ wird seinerseits so gewählt, dass das Empfangssignal beispielsweise nur durch den Term n=1 (Single Mode Betrieb) dominiert wird.

$$\Rightarrow U_{Ind} \approx A_1 \cdot e^{-\frac{p_1}{a} \cdot z_k}$$

Dies ist möglich, da die Terme für n= 2, 3, 4 bei $z_k$ viel kleiner werden, als der Term n=1. Dies ist in soweit wichtig, weil insbesondere der Term mit n=1 eine zuverlässige Geschwindigkeitsmessung des durchfliegenden Projektils gewährleistet.

Primär ist der $e^{-\frac{p_1}{a} \cdot z_k}$ von a abhängig. a wird bestimmt durch das Kaliber. Da die Frequenz des Sendesignals kleiner als die Grenzfrequenz ist, entsteht ein exponentieller Verlauf für das Empfangssignal.

Wird nach dem Durchgang des Projektils 6 gemessen, ist der Empfangskoppler 3 zwischen Projektilboden und Sendekoppler 2 zu platzieren. Erfolgt die Messung der Geschwindigkeit $V_0$ vor dem Durchflug Projektil 6, sollte der Empfangskoppler 3 zwischen Projektilspitze und Sendekoppler 2 zu liegen kommen. Werden beide Messmethoden kombiniert, sind entsprechend zwei Empfangskoppler 3 einzubinden. Der Sendekoppler 2 wäre dann zwischen den beiden Empfangskopplem 3 einzubinden.

Die Signalverarbeitung sollte wie folgt umgesetzt werden:

Durch den Vorbeiflug des Projektils 6 am Empfangskoppler 3 ergibt sich bekanntlich ein charakteristisches Signal. Der zeitliche Verlauf des empfangenen Signals gibt Auskunft über $V_0$.

Um nun das $V_0$ aus dem empfangenen Signal zu erhalten, wird das Signal dauernd in der Auswerteeinrichtung 5 zeitlich abgetastet und die Abtastwerte werden gespeichert. Dies geschieht auch, wenn kein Projektil 6 vorhanden ist. Durchfliegt nun ein Projektil 6 den Hohlleiter 1, bemerkt die Auswerteeinheit 5 die Anwesenheit anhand des charakteristischen Verlaufs des Empfangssignals. Diese Werte werden zur $V_0$ Bestimmung ausgewertet.

Da der Auswertealgorithmus den Innenradius a des Hohlleiters 1 verwendet, können Temperatur bedingte Änderungen des Innenradius a eine Messungenauigkeit bewirken. Um beispielsweise diese Einflüsse zu kompensieren, wird vor jedem Projektildurchlauf der leere Hohlleiter vermessen. Dieser aktuelle Wert wird zur Skalierung der relevanten Abtastwerte verwendet und gespeichert sowie bei der Messauswertung von der Auswerteeinheit abgerufen (Kalibrierung).

**Patentansprüche**

1.  Vorrichtung zur Messung der Mündungsgeschwindigkeit ($V_0$) eines Projektils (6) oder dergleichen, umfassend

    - ein glattes Waffen- bzw. Abschussrohr als Hohlleiter (1)
    - einen Signalerzeuger (4), welcher über eine Signalzuführung mit wenigstens einem Sende-Koppler (2) zur Anregung des Waffen- bzw. Abschussrohres (1) elektrisch verbunden ist, und
    - eine Empfangsleitung zur Weiterleitung der an wenigstens einem Empfangs-Koppler (3) gemessenen Signale an eine Auswerteeinrichtung (5),
    - mit einem je nach Modenselektion (TE; TM) des Hohlleiters (1) individuell wählbaren variablen Abstand zwischen dem Sende-Koppler (2) und dem Empfangs-Koppler (3) bzw. den Empfangs-Kopplem (3), wobei
    - der Empfangs-Koppler (3) zwischen Projektilboden des Projektils (6) und Sende-Koppler (2) platzierbar ist,
    - der Empfangs-Koppler (3) zwischen Projektilspitze des Projektils (6) und Sende-Koppler (2) platzierbar ist und
    - bei Anwesenheit wenigstens zweier Empfangs-Koppler (3) der Sende-Koppler (2) zwischen den wenigstens zwei Empfangs-Kopplern (3) platzierbar ist.

2.  Messvorrichtung nach Anspruch 1, **dadurch gekennzeichnet, dass** der Signalerzeuger (4) einen Träger im Dauerstrich-Betrieb (CW- Betrieb) erzeugt.

3.  Messvorrichtung nach Anspruch 1, **dadurch gekennzeichnet, dass** der signalerzeuger (4) ein modullertes Signal erzeugt.

4.  Messvorrichtung nach einem der Ansprüche 1 bis 3, **dadurch gekennzeichnet, dass** der / die Empfangs- Koppler (3) ein Pick -up - Sensor ist.

5.  Messvorrichtung nach einem der Ansprüche 1 bis 4, **dadurch gekennzeichnet, dass** der Abstand zwischen dem Sende- Koppler (2) und dem / den Empfangs- Koppler (3) in Abhängigkeit vom Kaliber, der Innenabmessung und der Frequenz gewählt wird.

6.  Verfahren zur Messung der Mündungegeschwindlgkeit ($V_0$) eines Projektils (6) oder dergleichen mit der Vorrichtung nach einem der Ansprüche 1 bis 3 mit den Schritten:

- Messung eines elektromagnetischen Feldes Im Waffen- bzw. Abschussrohr (1) ohne Anwesenheit des Projektils (6),
- Messung des elektromagnetischen Feldes vor dem Projektil (6) und / oder nach dem Projektil (6) beim Durchflug,
- Ermittlung eines anhand der Anwesenheit des Projektils (6) charakteristischen Verlaufs eines Empfangssignals.
- Bestimmung der Mündungsgeschwindigkeit ($V_0$) aus den gemessenen Signalen.

**7.** Verfahren nach Anspruch 6, **dadurch gekennzeichnet, dass** die Signale dauemd zeitlich abgetastet und die Abtastwerte gespeichert werden.

**8.** Verfahren nach Anspruch 6 oder 7, **dadurch gekennzeichnet, dass** die Messung des elektromagnetischen Feldes im leeren Waffen- bzw. Abschussrohres (1) ohne Anwesenheit des Projektils (6) zur Kalibrierung dient.

**9.** Verfahren nach Anspruch 8, **dadurch gekennzeichnet, dass** Temperatur bedingte Anderungen oder andere Einflüsse In der Kallbrlerung erfasst und berückeichtigt werden.

**10.** Verfahren nach Anspruch 9, **dadurch gekennzeichnet, dass** beim Durchtreten des Projektils (6) die zeitliche Änderung des elektromagnetischen Feldes erfasst und mit der Kalibrierung normiert wird.

**11.** Verfahren nach einem der Ansprüche 6 bis 10, **dadurch gekennzeichnet, dass** mit Kenntnis des Munitionstyps das Projektil (6) bestimmende Werte verwendet werden, um den Einfluss der Spitze bei der Messung des elektromagnetischen Feldes vor dem Projektil (6) zu kompensieren.

## Claims

**1.** Apparatus for measurement of the muzzle velocity ($V_0$) of a projectile (6) or the like, comprising

- a smooth weapon or launch barrel as a waveguide (1),
- a signal generator (4) which is electrically connected via a signal supply to at least one transmitting coupler (2) for excitation of the weapon or launch barrel (1), and
- a receiving line for passing on the signals measured at at least one receiving coupler (3) to an evaluation device (5),
- with a distance between the transmitting coupler (2) and the receiving coupler (3) or the receiving couplers (3) that is variable and can be selected individually depending on the mode selection (TE; TM) of the waveguide (1), wherein
- the receiving coupler (3) can be placed between the projectile base of the projectile (6) and the transmitting coupler (2),
- the receiving coupler (3) can be placed between the projectile nose of the projectile (6) and the transmitting coupler (2), and
- when at least two receiving couplers (3) are present, the transmitting coupler (2) can be placed between the at least two receiving couplers (3).

**2.** Measurement apparatus according to Claim 1, **characterized in that** the signal generator (4) generates a carrier in the continuous-wave mode (CW mode).

**3.** Measurement apparatus according to Claim 1, **characterized in that** the signal generator (4) generates a modulated signal.

**4.** Measurement apparatus according to one of Claims 1 to 3, **characterized in that** the receiving coupler or couplers (3) is/are a pick-up sensor.

**5.** Measurement apparatus according to one of Claims 1 to 4, **characterized in that** the distance between the transmitting coupler (2) and the receiving coupler or couplers (3) is selected depending on the calibre, the internal size and the frequency.

**6.** Method for measurement of the muzzle velocity ($V_0$) of a projectile (6) or the like by the apparatus according to one of Claims 1 to 3, having the following steps:

- measurement of an electromagnetic field of the weapon or launch barrel (1) without the presence of the projectile (6),
- measurement of the electromagnetic field before the projectile (6) and/or after the projectile (6) upon passing through,
- determination of a profile of a received signal that is characteristic on the basis of the presence of the projectile (6),
- determination of the muzzle velocity ($V_0$) from the measured signals.

**7.** Method according to Claim 6, **characterized in that** the signals are sampled continuously in time, and the sample values are stored.

**8.** Method according to Claim 6 or 7, **characterized in that** the measurement of the electromagnetic field of the empty weapon or launch barrel (1) without the presence of the projectile (6) serves for calibration.

**9.** Method according to Claim 8, **characterized in that** temperature-dependent changes or other influences are recorded and considered in the calibration.

**10.** Method according to Claim 9, **characterized in that**, when the projectile (6) passes through, the rate of change of the electromagnetic field is detected, and is normalized using the calibration.

**11.** Method according to one of Claims 6 to 10, **characterized in that** values which are determined with knowledge of the projectile (6) munition type are used in order to compensate for the influence of the nose when measuring the electromagnetic field in front of the projectile (6).

**Revendications**

**1.** Dispositif de mesure de la vitesse initiale ($V_0$) d'un projectile (6) ou similaire, comportant

- un tuyau lisse d'une arme ou plutôt un canon en forme de guide creux (1),
- un générateur de signal (4) relié électriquement par l'intermédiaire d'une amenée de signal à au moins un coupleur d'émission (2) pour l'excitation du tuyau de l'arme ou plutôt du canon (1), et
- une ligne de réception pour transmettre les signaux mesurés à au moins un coupleur de réception (3) vers un équipement de traitement (5),
- avec une distance variable entre le coupleur d'émission (2) et le coupleur de réception (3) ou les coupleurs de réception (3) pouvant être choisis individuellement en fonction de la sélection du mode (TE, TM) du guide creux (1), dans lequel
- le coupleur de réception (3) peut être placé entre la base du projectile (6) et le coupleur d'émission (2),
- le coupleur de réception (3) peut être placé entre la pointe du projectile (6) et le coupleur d'émission (2) et
- en présence d'au moins deux coupleurs de réception (3) le coupleur d'émission (2) peut être placé entre les deux coupleurs de réception (3) au moins.

**2.** Dispositif de mesure selon la revendication 1, **caractérisé en ce que** le générateur de signal (4) génère une porteuse en régime continu (régime CW).

**3.** Dispositif de mesure selon la revendication 1, **caractérisé en ce que** le générateur de signal (4) génère un signal modulé.

**4.** Dispositif de mesure selon une des revendications 1 à 3, **caractérisé en ce que** le/les coupleurs de réception (3) sont un capteur de pick-up.

**5.** Dispositif de mesure selon une des revendications 1 à 4, **caractérisé en ce que** la distance entre le coupleur d'émission (2) et le/les coupleurs de réception (3) est choisie en fonction du calibre, de la dimension intérieure, et de la fréquence.

**6.** Procédé de mesure de la vitesse initiale ($V_0$) d'un projectile (6) ou similaire avec un dispositif selon une des revendications 1 à 3 avec les étapes :

- mesure d'un champ électromagnétique dans le tuyau de l'arme ou plutôt le canon (1) sans présence du projectile (6),
- mesure d'un champ électromagnétique avant le projectile (6) et/ou après le projectile (6) lors de son passage,
- détermination d'un déroulement caractéristique d'un signal de réception en se fondant sur la présence du projectile (6),
- détermination de la vitesse initiale ($V_0$) à partir des signaux mesurés.

**7.** Procédé selon la revendication 6, **caractérisé en ce que** les signaux sont lus en permanence et les valeurs lues sont mémorisées.

**8.** Procédé selon la revendication 6 ou 7, **caractérisé en ce que** la mesure du champ électromagnétique dans le tuyau vide de l'arme ou plutôt le canon (1) sans présence du projectile (6) sert au calibrage.

**9.** Procédé selon la revendication 8, **caractérisé en ce que** des modifications induites par la température ou d'autres influences sont enregistrées dans le calibrage et sont prises en compte.

**10.** Procédé selon la revendication 9, **caractérisé en ce que** lors du passage du projectile (6), la modification temporelle du champ électromagnétique est enregistrée et normalisée avec le calibrage.

**11.** Procédé selon une des revendications 6 à 10, **caractérisé en ce que** la connaissance du type de munition du projectile (6) entraine l'utilisation de valeurs précises pour compenser l'influence de la pointe lors de la mesure du champ électromagnétique avant le projectile (6).

Fig. 1

Fig. 2

EP 2 283 300 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69709291 T2
- EP 0840087 B1
- DE 102005024179 A1
- EP 0023365 A2
- DE 2717949 A1
- EP 0331670 A1
- DE 102006058375